# EUROPEAN PATENT SPECIFICATION

(11) **EP 3 641 385 B1**
(45) Date of publication and mention of the grant of the patent: **07.09.2022**
(21) Application number: 18818659.7
(22) Date of filing: 08.06.2018
(51) Int. Cl.: H04W 24/10

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATIONS

(30) Priority: 16.06.2017 CN 201710459442
(43) Date of publication of application: 22.04.2020
(73) Proprietor: Huawei Technologies Co., Ltd., Longgang District Shenzhen, Guangdong 518129 (CN)
(72) Inventor: LUO, Jun, Shenzhen Guangdong 518129 (CN); LIU, Jin, Shenzhen Guangdong 518129 (CN); LIU, Yalin, Shenzhen Guangdong 518129 (CN); ZENG, Qinghai, Shenzhen Guangdong 518129 (CN)
(74) Representative: Roth, Sebastian
(86) International application number: PCT/CN2018/090418
(87) International publication number: WO 2018/228287

(56) References cited:
- CN-A- 106 165 323
- CN-A- 106 465 173
- MEDIATEK: "WF On RRM measurement", 3GPP DRAFT; R1-1709810 WF ON RRM MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 19 May 2017 (2017-05-19), XP051285563, Retrieved from the Internet: URL:http://www.3gpp.org/ftp/tsg_ran/WG1_RL 1/TSGR1_89/Docs/ [retrieved on 2017-05-19]
- ZTE: "RRM measurements on Idle mode RS", 3GPP DRAFT; R2-1704645 RRM MEASUREMENTS ON IDLE MODE RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275190, Retrieved from the Internet: URL:http://www.3gpp.org/ftp/Meetings_3GPP_ SYNC/RAN2/Docs/ [retrieved on 2017-05-14]
- ZTE: "Discussion on measurement configuration", 3GPP DRAFT; R2-1704642 DISCUSSION ON MEASUREMENT CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275187, Retrieved from the Internet: URL:http://www.3gpp.org/ftp/Meetings_3GPP_ SYNC/RAN2/Docs/ [retrieved on 2017-05-14]
- ERICSSON: "Measurement configuration for IDLE RS", 3GPP DRAFT; R2-1704104 - MEASUREMENT CONFIGURATION FOR IDLE RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou; 20170515 - 20170519 14 May 2017 (2017-05-14), XP051274712, Retrieved from the Internet: URL:http://www.3gpp.org/ftp/Meetings_3GPP_ SYNC/RAN2/Docs/ [retrieved on 2017-05-14]
- SAMSUNG: "SS Periodicity", 3GPP TSG RAN WG1 #88 R1-1702903, 17 February 2017 (2017-02-17), XP051210047,

## Description

### TECHNICAL FIELD

This application relates to the communications field, and more specifically, to an information transmission method and apparatus.

### BACKGROUND

A radio resource management (Radio Resource Management, RRM) method in an existing Long Term Evolution (Long Term Evolution, LTE) system uses a downlink signal-based measurement manner. To be specific, a network device sends a downlink reference signal, for example, a cell-specific reference signal (Cell-specific Reference Signal, CRS) having a fixed time-frequency location, and a terminal device measures measurement results, such as reference signal received power (Reference Signal Received Power, RSRP)/reference signal received quality (Reference Signal Received Quality, RSPQ), of the CRS sent by the network device, and reports the measurement results to the network device, so that the network device determines handover and movement of the terminal device.

In the foregoing solution, a network side needs to frequently send a fixed downlink CRS reference signal. As a result, there are excessive overheads on the network side and system efficiency is affected. Therefore, this solution is no longer applicable to a 5G new radio access (New Radio Access, NR) system.

Therefore, to ensure that the terminal device can perform efficient measurement, a technical solution applicable to NR is urgently needed to improve system efficiency.

MEDIATEK, "WF On RRM measurement", vol. RAN WG1, no. Hangzhou; 20170515 - 20170519, (20170519), 3GPP DRAFT; R1-1709810 WF ON RRM MEASUREMENT, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL http://www.3gpp.org/ftp/tsg_ran/WG1_RL1/TSGR1_89/Docs/, (20170519), discloses configurations of single SS burst set periodicity and information regarding measurement timing/duration.

ZTE, "RRM measurements on Idle mode RS", vol. RAN WG2, no. Hangzhou, China; 20170515 - 20170519, (20170514), 3GPP DRAFT; R2-1704645 RRM MEASUREMENTS ON IDLE MODE RS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN2/Docs/, (20170514), discloses which reference signals are used as Idle mode RS for RRM measurement. ZTE: "Discussion on measurement configuration", vol. RAN WG2, no. Hangzhou, China; 20170519, (20170514), 3GPP DRAFT; R2-1704642 DISCUSSION ON MEASUREMENT CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL:http://www.3gpp.org/ftp/Meetings_3GPP_SYNC/ RAN2/Docs/, (20170514), discloses a network providing one SS burst set periodicity information per frequency carrier to the UE and information to derive measurement timing/ duration, which can be applied by the UE for all cells on the same carrier.

### SUMMARY

The invention is defined by the appended claims, providing an information transmission method by a network device according to claim 1 and a corresponding network device according to claim 6, as well as an information transmission method by a terminal device according to claim 2 and a corresponding terminal device according to claim 7, as well as a computer storage medium according to claim 11 and a computer program product according to claim 12.

Embodiments and aspects described hereafter which are not covered by the claims are presented not as embodiments of the invention but as examples useful for understanding the invention. This application provides an information transmission method and apparatus, so as to improve system efficiency.

According to a first aspect, an information transmission method is provided, including:
determining, by a network device, measurement configuration information used for synchronization signal block measurement, wherein the measurement configuration information comprises a group of measurement configuration parameters and a plurality of physical cell identifiers of a plurality of cells for which the group of measurement configuration parameters is used; and
sending, by the network device, the measurement configuration information to a terminal device;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

In this embodiment of the present invention, a network device configures, for the terminal device, a measurement configuration parameter for measuring a synchronization signal block, so that the network device does not need to always send a downlink reference signal. This can reduce network-side overheads and improve system efficiency.

In some possible implementations, each group of measurement configuration parameters is associated with a transmission parameter of a synchronization signal block of the plurality of cells.

In some possible implementations, each group of measurement configuration parameters further includes at least one of a time position of a measurement window, and duration of the measurement window.

In some possible implementations, the measurement period may be associated with a synchronization signal burst set period of the plurality of cells, and the measurement window may be associated with a time domain resource corresponding to the synchronization signal burst set of the plurality of cells.

In some possible implementations, the time position of the measurement window may be a start time position of the measurement window, and a specific value may be a time value of timing of a serving cell relative to the measurement window, in other words, the specific value may be configured by referring to the timing of the serving cell.

In some possible implementations, the measurement window covers a time domain resource corresponding to at least one synchronization signal burst set of each cell in the plurality of cells.

In some possible implementations, the measurement period is a minimum common multiple of the synchronization signal burst set period of the plurality of cells.

In some possible implementations, each group of measurement configuration parameters corresponds to a plurality of cells, and a deviation of time domain resources corresponding to synchronization signal burst sets among the plurality of cells does not exceed a threshold.

The time domain resources corresponding to the synchronization signal burst sets of the plurality of cells are aligned within a specific range. In this way, the measurement window may be consistent with the time domain resources corresponding to the synchronization signal burst sets of the plurality of cells.

In some possible implementations, the duration of the measurement window may be a sum of a time domain resource length corresponding to one synchronization signal burst set and the threshold multiplied by 2.

In some possible implementations, the threshold may be 0.5 ms.

In some possible implementations, the at least one group of measurement configuration parameters corresponds to one measurement frequency.

In some possible implementations, one group of measurement configuration parameters may be configured for all cells at one measurement frequency.

Time domain resources corresponding to synchronization signal burst sets of all the cells at one measurement frequency are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the measurement frequency within one measurement window.

In some possible implementations, two groups of measurement configuration parameters may be configured for all cells at one measurement frequency. For example, one group of measurement configuration parameters is for a serving cell, and the other group of measurement configuration parameters is for all neighboring cells.

In some possible implementations, a plurality of groups of measurement configuration parameters may be configured for all cells at one measurement frequency. Each group of measurement configuration parameters corresponds to a group of cells.

In some possible implementations, the measurement configuration information includes one group of measurement configuration parameters, and the one group of measurement configuration parameters corresponds to all measurement frequencies.

Time domain resources corresponding to synchronization signal burst sets of cells at all measurement frequencies are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the plurality of measurement frequencies within one measurement window.

A network side controls sending of the synchronization signal burst sets, so that the terminal device can complete measurement on the plurality of cells within the one measurement window, and the terminal device does not need to frequently perform measurement. This reduces overheads of the terminal device and improves measurement efficiency.

In some possible implementations, the measurement configuration information includes a plurality of groups of measurement configuration parameters, and different groups of measurement configuration parameters in the plurality of groups of measurement configuration parameters correspond to different measurement frequencies.

In some possible implementations, two groups of measurement configuration parameters may be configured for all measurement frequencies. For example, one group of measurement configuration parameters is for a serving cell, and the other group of measurement configuration parameters is for a cell at a non-serving frequency and another cell at a serving frequency.

In some possible implementations, different measurement configuration parameters may have a same measurement period and different time positions of a measurement window. The time positions of the measurement window may be configured by referring to the timing of the serving cell.

In some possible implementations, network devices may exchange (for example, by using an X2 interface) information about measurement windows and measurement periods of cells, or exchange transmission parameters of synchronization signal blocks of cells, for example, a synchronization signal burst set period and a time domain resource location corresponding to a synchronization signal burst set. A serving network device determines the measurement configuration information based on the exchanged information.

In some possible implementations, the sending the measurement configuration information to the terminal device includes:
sending the measurement configuration information to the terminal device by using common signaling.

In some possible implementations, the common signaling includes a physical broadcast channel PBCH, remaining system information RMSI, or other system information OSI.

In some possible implementations, the sending the measurement configuration information to the terminal device includes:
sending the measurement configuration information to the terminal device by using dedicated signaling.

In some possible implementations, the dedicated signaling includes radio resource control RRC dedicated signaling.

In some possible implementations, the measurement configuration information sent by using the dedicated signaling is used to update the measurement configuration information sent by using the common signaling.

According to a second aspect, an information transmission method is provided, including:
receiving, by a terminal device, measurement configuration information sent by a network device, wherein the measurement configuration information comprises a group of measurement configuration parameters and a plurality of physical cell identifiers of a plurality of cells for which the group of measurement configuration parameters is used; and
measuring, by the terminal device, a synchronization signal block based on the measurement configuration information;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

In this embodiment of the present invention, the network device configures, for a terminal device, a measurement configuration parameter for measuring a synchronization signal block, so that the network device does not need to always send a downlink reference signal. This can reduce network-side overheads and improve system efficiency.

In some possible implementations, in a corresponding measurement window, the terminal device performs RSRP/RSPQ measurement on an NR-SSS and/or a PBCH-DMRS in an SS block in a synchronization signal burst set sent by a corresponding cell, and reports a measurement result to a serving cell.

In some possible implementations, each group of measurement configuration parameters is associated with a transmission parameter of the synchronization signal block of the at least one cell.

In some possible implementations, each group of measurement configuration parameters further includes at least one of a time position of a measurement window, and duration of the measurement window.

In some possible implementations, the measurement window covers a time domain resource corresponding to at least one synchronization signal burst set of each cell in the plurality of cells.

In some possible implementations, each group of measurement configuration parameters corresponds to a plurality of cells, and a deviation of time domain resources corresponding to synchronization signal burst sets among the plurality of cells does not exceed a threshold.

In some possible implementations, the at least one group of measurement configuration parameters corresponds to one measurement frequency.

In some possible implementations, the measurement configuration information includes one group of measurement configuration parameters, and the one group of measurement configuration parameters corresponds to all measurement frequencies.

In some possible implementations, the measurement configuration information includes a plurality of groups of measurement configuration parameters, and different groups of measurement configuration parameters in the plurality of groups of measurement configuration parameters correspond to different measurement frequencies.

In some possible implementations, when performing measurement, the terminal device may perform, at a time, measurement on cells at a same frequency according to a frequency sequence and by using a measurement gap of the frequency, and switch to another frequency after completing measurement at a frequency. The terminal device may also measure cells in different measurement windows according to a time sequence.

A network side controls sending of the synchronization signal burst sets, so that the terminal device can complete measurement on the plurality of cells within one measurement window, and the terminal device does not need to frequently perform measurement. This reduces overheads of the terminal device and improves measurement efficiency.

In some possible implementations, the receiving measurement configuration information sent by a network device includes:
receiving, by using common signaling, the measurement configuration information sent by the network device.

In some possible implementations, the common signaling includes a physical broadcast channel PBCH, remaining system information RMSI, or other system information OSI.

In some possible implementations, the receiving measurement configuration information sent by a network device includes:
receiving, by using dedicated signaling, the measurement configuration information sent by the network device.

In some possible implementations, the dedicated signaling includes radio resource control RRC dedicated signaling.

In some possible implementations, the method further includes:
updating, based on the measurement configuration information received by using the dedicated signaling, the measurement configuration information received by using the common signaling.

According to a third aspect, an information transmission apparatus is provided, including a processor and a transceiver, configured to execute the method in the first aspect or any possible implementation of the first aspect.

According to a fourth aspect, an information transmission apparatus is provided, including a processor and a transceiver, configured to execute the method in the second aspect or any possible implementation of the second aspect.

According to a fifth aspect, a computer storage medium is provided. The computer storage medium stores program code, and the program code may be used to instruct to execute the method in the first aspect or the second aspect or any possible implementation of the first aspect or the second aspect.

According to a sixth aspect, a computer program product including an instruction is provided. When the computer program product runs on a computer, the computer executes the method in the first aspect or the second aspect or any possible implementation of the first aspect or the second aspect.

### BRIEF DESCRIPTION OF DRAWINGS

FIG. 1 is a schematic diagram of a system used in an embodiment of the present invention;
FIG. 2 is a schematic diagram of a network architecture according to an embodiment of the present invention;
FIG. 3 is a schematic diagram of a resource structure of a synchronization signal block according to an embodiment of the present invention;
FIG. 4 is a schematic flowchart of an information transmission method according to an embodiment of the present invention;
FIG. 5a to FIG. 5c are schematic diagrams of a measurement window and a measurement period according to an embodiment of the present invention;
FIG. 6 is a schematic block diagram of an information transmission apparatus according to an embodiment of the present invention; and
FIG. 7 is a schematic block diagram of an information transmission apparatus according to another embodiment of the present invention.

### DESCRIPTION OF EMBODIMENTS

The following describes technical solutions of this application with reference to accompanying drawings.

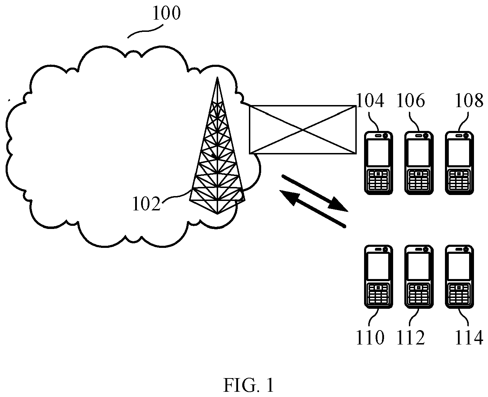

FIG. 1 is a schematic diagram of a system used in an embodiment of the present invention. As shown in FIG. 1, the system 100 may include a network device 102 and terminal devices 104, 106, 108, 110, 112, and 17. The network device and the terminal devices are connected in a wireless manner. It should be understood that FIG. 1 illustrates only one network device as an example, but this embodiment of the present invention is not limited thereto. For example, the system may further include more network devices. Similarly, the system may also include more terminal devices. It should be further understood that the system may also be referred to as a network, and this is not limited in this embodiment of the present invention.

This specification describes the embodiments with reference to a terminal device. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, a terminal device in a future 5G network, a terminal device in a future evolved public land mobile network (Public Land Mobile Network, PLMN), or the like.

By way of example but not limitation, the terminal device may also be a wearable device in this embodiment of the present invention. The wearable device may also be referred to as a wearable smart device, and is a generic name for devices that are wearable and that are developed by applying a wearable technology to perform intelligent design for daily wear, such as glasses, gloves, a watch, clothing, or shoes. The wearable device is a portable device that is directly worn on a body or integrated into clothing or an accessory of a user. The wearable device is not merely a hardware device, and further implements a powerful function through software support, data exchange, or cloud interaction. A wearable smart device in a broad sense includes a large-size device that has comprehensive functions and that can implement all of or a part of functions without depending on a smartphone, for example, smart watches or smart glasses, and includes a device that has merely a dedicated application function and needs to cooperate with other devices such as a smartphone, for example, various types of smart bands that monitor vital signs and smart jewelry.

This specification describes the embodiments with reference to a network device. The network device may be a device used to communicate with the terminal device, and the network device may be a base transceiver station (Base Transceiver Station, BTS) in Global System for Mobile Communications (Global System for Mobile Communications, GSM) or Code Division Multiple Access (Code Division Multiple Access, CDMA), or may be a base station (NodeB, NB) in Wideband Code Division Multiple Access (Wideband Code Division Multiple Access, WCDMA), or may further be an evolved NodeB (Evolved Node B, eNB or eNodeB) in Long Term Evolution (Long Term Evolution, LTE), or may further be a wireless controller in a cloud radio access network (Cloud Radio Access Network, CRAN) scenario, or the network device may be a relay station, an access point, an in-vehicle device, a wearable device, a network device in a future 5G network, a network device in a future evolved PLMN, or the like.

In addition, in this embodiment of the present invention, the network device provides a service for a cell, and the terminal device communicates with the network device by using a transmission resource (for example, a frequency domain resource or a spectrum resource) used by the cell. The cell may be a cell corresponding to a network device (for example, a base station). The cell may belong to a macro base station, or may belong to a base station corresponding to a small cell (small cell). The small cell may include a metro cell (Metro cell), a micro cell (Micro cell), a pico cell (Pico cell), a femto cell (Femto cell), and the like. These small cells have small coverage and low transmit power, and are applicable to high-speed data transmission services. In addition, the cell may be a hypercell (Hypercell).

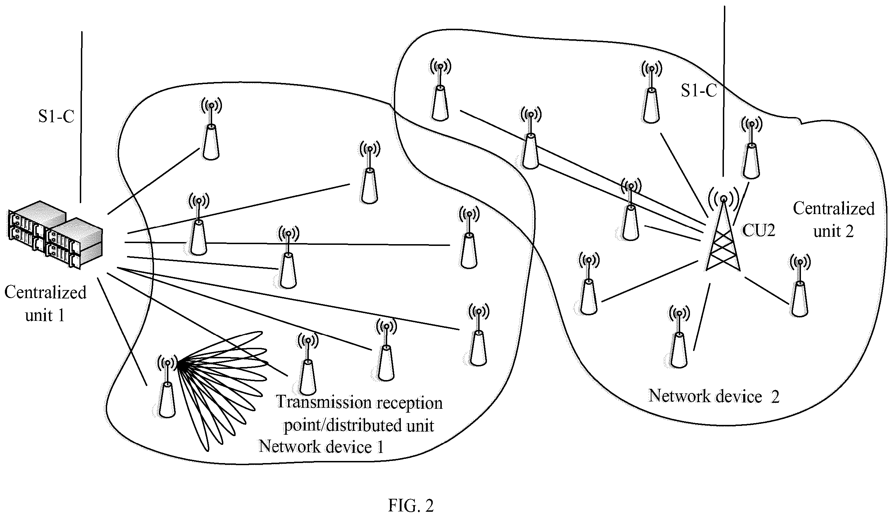

By way of example, FIG. 2 is a schematic diagram of a network architecture used in an embodiment of the present invention. The network architecture schematic diagram may show a network architecture of a next-generation wireless communications system NR. In the network architecture schematic diagram, the network device may be classified into a centralized unit (Centralized Unit, CU) and a plurality of transmission reception points (Transmission Reception Point, TRP)/distributed units (Distributed Unit, DU), in other words, a bandwidth-based unit (Bandwidth Based Unit, BBU) of the network device is reconstructed into DU and CU function entities. It should be noted that, forms and quantities of the centralized unit and the TRP/DU are not limited in this embodiment of the present invention. Although a network device 1 and a network device 2 shown in FIG. 2 respectively correspond to different forms of centralized units, their respective functions are not affected. It may be understood that a centralized unit 1 and TRPs/DUs in the dashed-line box are component elements of the network device 1, and a centralized unit 2 and TRPs/DUs in the solid-line box are component elements of the network device 2. The network device 1 and the network device 2 are network devices (or referred to as base stations) used in the NR system.

The CU may process a wireless upper-layer protocol stack function, for example, a function at a radio resource control (Radio Resource Control, RRC) layer, a Packet Data Convergence Protocol (Packet Data Convergence Protocol, PDCP) layer, or the like. The CU can also support transfer of some core network functions to an access network, which is referred to as an edge computing network. The CU can meet a higher requirement of a future communications network on a network delay, and new services such as video, online shopping, and virtual reality/augmented reality are supported in the future communications network.

The DU may mainly process physical layer functions and layer-2 functions with high real-time requirements. Considering a transmission resource between a radio remote unit (Radio Remote Unit, RRU) and the DU, some physical layer functions of the DU may be transferred up to the RRU. With miniaturization development of RRUs, a DU can be combined with an RRU in an even more radical manner.

CUs may be deployed in a centralized manner. DU deployment depends on an actual network environment. DUs may also be deployed in a centralized manner in a core urban area, or in an area with high traffic density, small inter-station distances, and limited equipment room resources, such as a college or a large venue. DUs may be deployed in a distributed manner in an area with low traffic density and large inter-station distances, such as a suburban area or a mountainous area.

An Sl-C interface shown in FIG. 2 may be a standard interface between a network device and a core network, and a specific device connected to the Sl-C is not shown in FIG. 2.

In NR, a CRS at a fixed time-frequency position is no longer applicable. In addition, to adapt to directional beam transmission of a high-frequency NR system, the NR system may use synchronization signal blocks (Synchronization Signal block, SS block) in a plurality of beam directions to perform cell RSRP measurement.

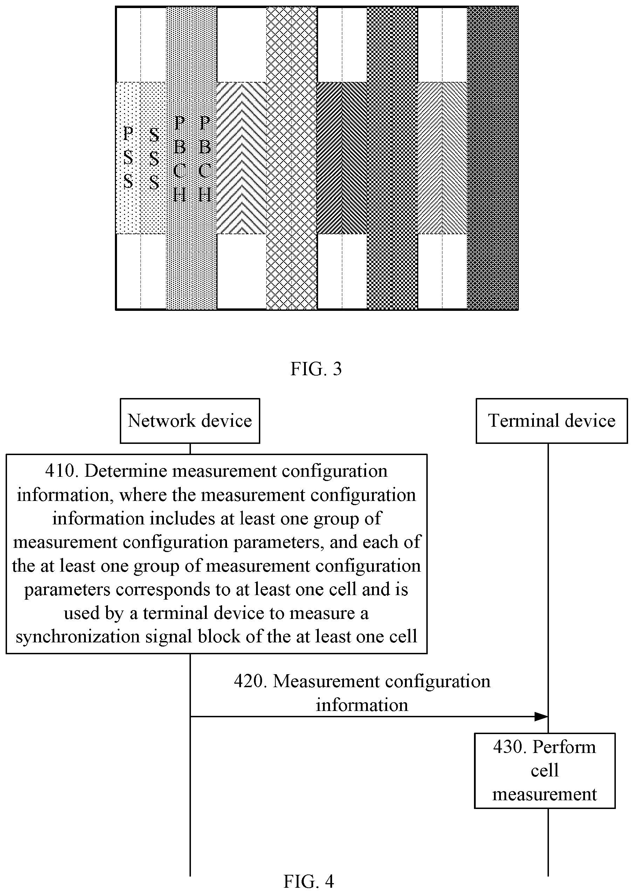

FIG. 3 is a schematic diagram of a resource structure of a synchronization signal block according to an embodiment of the present invention. It should be understood that FIG. 3 is merely an example, and does not constitute a limitation on this embodiment of the present invention.

As shown in FIG. 3, a synchronization signal and a broadcast channel constitute an SS block, in other words, an NR primary synchronization signal (NR-PSS), an NR secondary synchronization signal (NR-SSS), and an NR physical broadcast channel (NR-Physical Broadcast Channel, NR-PBCH) are sent in one SS block.

In the embodiments of the present invention, for brevity, the NR-PSS, the NR-SSS, and the NR-PBCH in the synchronization signal block are respectively referred to as a PSS, an SSS, and a PBCH.

In addition, a reference signal may further be inserted into the SS block, for example, a PBCH demodulation reference signal (Demodulation Reference Signal, DMRS).

One or a plurality of SS blocks may constitute a synchronization signal burst (SS burst). One or a plurality of SS bursts may constitute a synchronization signal burst set (SS burst set). The SS burst set is periodically sent. In other words, the network device sends the SS blocks by periodically sending the SS burst set, and each SS burst set includes a plurality of SS blocks.

For energy saving of the network device, a period of sending the SS burst set including the SS blocks by the network device may be configured by a network side. For example, for a network device with a small number of users, a period of sending an SS burst set may be set to 160 ms. For a network device with a large number of users, a shorter period of sending an SS burst set may be set.

SS block transmission parameters may vary with different network devices. Therefore, to enable the terminal device to perform efficient neighboring cell and adjacent-frequency measurement, a measurement window and a measurement period need to be configured for the terminal device. In view of this, this embodiment of the present invention provides a configuration solution for measurement configuration information of a terminal device, so as to improve measurement efficiency.

FIG. 4 is a schematic flowchart of an information transmission method according to an embodiment of the present invention. A network device shown in FIG. 4 may be the network device described above, and a terminal device may be the terminal device described above. Certainly, a quantity of network devices and terminal devices in an actual system may not be limited to examples in this embodiment or other embodiments, and details are not described in the following.

410: The network device determines measurement configuration information, where the measurement configuration information includes at least one group of measurement configuration parameters, and each of the at least one group of measurement configuration parameters corresponds to at least one cell and is used by the terminal device to measure a synchronization signal block of the at least one cell. It may be understood that an identifier (identity) may be used to identify a cell, and the identifier may be referred to as a cell identifier. The cell identifier may be, for example, a cell identifier (Cell ID), a physical cell identifier (Physical Cell ID, PCI for short), a base station identifier, or any information that can be used to identify the cell.

In this embodiment of the present invention, the network device configures the measurement configuration information for the terminal device. The measurement configuration information includes at least one group of measurement configuration parameters. The at least one group of measurement configuration parameter may indicate a measurement window and a measurement period.

Optionally, each group of measurement configuration parameters includes at least one of a time position of the measurement window, duration of the measurement window, and the measurement period. Optionally, the time position of the measurement window may be a start time position of the measurement window, and a specific value may be a time value of timing of a serving cell relative to the measurement window, in other words, the specific value may be configured by referring to the timing of the serving cell.

In this embodiment of the present invention, one group of measurement configuration parameters may correspond to at least one cell, in other words, the at least one cell uses the same group of measurement configuration parameters. Because each cell is usually represented by a cell identifier, the one group of measurement configuration parameters may correspond to an identifier of the at least one cell.

Optionally, the at least one cell is a cell group. For example, the at least one cell includes a plurality of cells, and the cells constitute a cell group. The cell group may be represented by using a cell identifier list of the cell group. For example, the cell group may be represented by using a PCI list, or a cell group identifier may be defined for the cell group.

The at least one group of measurement configuration parameters is associated with a transmission parameter of the synchronization signal block of the at least one cell. For example, the measurement period may be associated with a synchronization signal burst set period of the at least one cell, and the measurement window may be associated with a time domain resource corresponding to a synchronization signal burst set of the at least one cell.

Optionally, the measurement window covers a time domain resource corresponding to at least one synchronization signal burst set of each cell in the at least one cell.

Optionally, the measurement period is a common multiple of the synchronization signal burst set period of the at least one cell, or a maximum value in the synchronization signal burst set period of the at least one cell. For example, the measurement period is a minimum common multiple of the synchronization signal burst set period of the at least one cell.

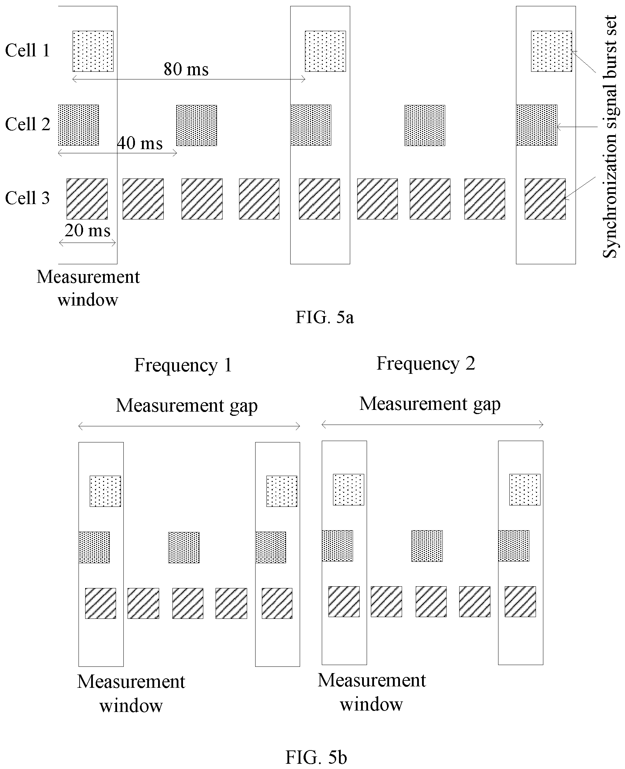

For example, as shown in FIG. 5a, a cell 1, a cell 2, and a cell 3 use a same group of measurement configuration parameters. A synchronization signal burst set period of the cell 1 is 80 ms, a synchronization signal burst set period of the cell 2 is 40 ms, and a synchronization signal burst set period of the cell 3 is 20 ms. In this way, for the cell 1, the cell 2, and the cell 3, a measurement period may be set to 80 ms, and the measurement window may be configured to cover a time domain resource corresponding to a synchronization signal burst set of each of the three cells.

Optionally, when each group of measurement configuration parameters corresponds to a plurality of cells, a deviation of time domain resources corresponding to synchronization signal burst sets among the plurality of cells does not exceed a threshold. In other words, the time domain resources corresponding to the synchronization signal burst sets of the plurality of cells are aligned within a specific range. In this way, the measurement window may be consistent with the time domain resources corresponding to the synchronization signal burst sets of the plurality of cells.

As shown in FIG. 5a, a deviation of the time domain resources corresponding to the synchronization signal burst sets of the three cells is relatively small. In this way, duration of the measurement window may be longer than a time domain resource length corresponding to the synchronization signal burst set.

Optionally, the duration of the measurement window may be a sum of the time domain resource length corresponding to the synchronization signal burst set and the threshold multiplied by 2.

For example, the threshold may be 0.5 ms, the time domain resource length corresponding to the synchronization signal burst set is 5 ms, and the duration of the measurement window may be 6 ms.

Optionally, in one embodiment of the present invention, the at least one group of measurement configuration parameters corresponds to one measurement frequency. In other words, one or a plurality of groups of measurement configuration parameters may be configured for all cells at one measurement frequency.

Optionally, one group of measurement configuration parameters may be configured for all cells at one measurement frequency, in other words, one measurement window and one measurement period are configured for all the cells at one measurement frequency.

Correspondingly, time domain resources corresponding to synchronization signal burst sets of all the cells at one measurement frequency are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the measurement frequency within one measurement window.

Optionally, two groups of measurement configuration parameters may be configured for all cells at one measurement frequency. For example, one group of measurement configuration parameters is for a serving cell, and the other group of measurement configuration parameters is for all neighboring cells.

Optionally, a plurality of groups of measurement configuration parameters may be configured for all the cells at one measurement frequency. Each group of measurement configuration parameters corresponds to a group of cells.

Optionally, in one embodiment of the present invention, the measurement configuration information includes one group of measurement configuration parameters, and the one group of measurement configuration parameters corresponds to all measurement frequencies. In other words, same measurement configuration parameters are used for all the measurement frequencies.

Correspondingly, time domain resources corresponding to synchronization signal burst sets of cells at all measurement frequencies are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the plurality of measurement frequencies within one measurement window.

Optionally, in one embodiment of the present invention, the measurement configuration information includes a plurality of groups of measurement configuration parameters, and different groups of measurement configuration parameters in the plurality of groups of measurement configuration parameters correspond to different measurement frequencies. In other words, different measurement configuration parameters may be configured for different measurement frequencies.

Optionally, two groups of measurement configuration parameters may be configured for all the measurement frequencies. For example, one group of measurement configuration parameters is for a serving cell, and the other group of measurement configuration parameters is for a cell at a non-serving frequency and another cell at a serving frequency.

Optionally, measurement configuration parameters for different frequencies may have a same measurement period and different time positions of a measurement window. The time positions of the measurement window may be configured by referring to the timing of the serving cell.

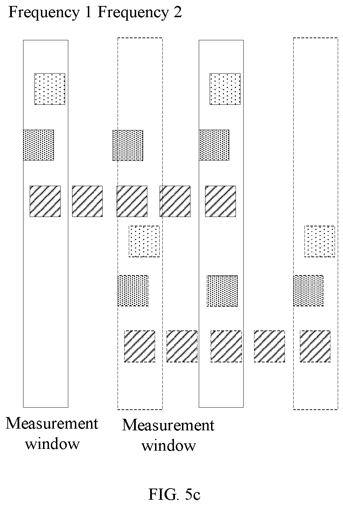

When performing measurement, the terminal device may perform, at a time, measurement on cells at a same frequency according to a frequency sequence and by using a measurement gap (measurement gap) of the frequency, and switch to another frequency after completing measurement at a frequency. For example, as shown in FIG. 5b, for a frequency 1, the terminal device performs measurement on all cells at the frequency 1 according to a measurement gap of the frequency 1, switches to a frequency 2, and performs measurement on all cells at the frequency 2 according to a measurement gap of the frequency 2. Alternatively, the terminal device may perform measurement on cells in different measurement windows according to a time sequence. For example, as shown in FIG. 5c, if a first measurement window in the time sequence is a measurement window of the frequency 1, the terminal device performs measurement for the frequency 1 in the first measurement window; if a second measurement window is a measurement window of the frequency 2, the terminal device switches to the frequency 2 for measurement in the second measurement window.

It should be understood that FIG. 5b and FIG. 5c are merely examples, and do not constitute a limitation on this embodiment of the present invention.

Optionally, network devices may exchange (for example, by using an X2 interface) information about measurement windows and measurement periods of cells, or exchange transmission parameters of synchronization signal blocks of cells, for example, a synchronization signal burst set period and a time domain resource location corresponding to a synchronization signal burst set. A serving network device determines the measurement configuration information based on the exchanged information.

420: The network device sends the measurement configuration information to the terminal device.

The network device sends the measurement configuration information to the terminal device. Correspondingly, the terminal device performs cell measurement based on the measurement configuration information.

Optionally, the network device sends the measurement configuration information to the terminal device by using common signaling.

This manner may be applicable to a terminal device in connected mode or idle mode.

For example, the common signaling may be a PBCH, remaining system information (remaining system information, RMSI), or other system information (other system information, OSI). This is not limited in this embodiment of the present invention.

Optionally, the network device sends the measurement configuration information to the terminal device by using dedicated signaling.

This manner may be applicable to a terminal device in connected mode.

For example, the dedicated signaling may be radio resource control (radio resource control, RRC) dedicated signaling. This is not limited in this embodiment of the present invention.

Optionally, the measurement configuration information sent by using the dedicated signaling may be used to update the measurement configuration information sent by using the common signaling.

Correspondingly, after receiving, by using the dedicated signaling, the measurement configuration information sent by the network device, the terminal device updates, based on the measurement configuration information received by using the dedicated signaling, the measurement configuration information received by using the common signaling.

The terminal device correspondingly performs receiving based on sending by the network device. It should be understood that receiving of the terminal device corresponds to sending of the network device, and therefore details are not described herein again.

430: The terminal device performs cell measurement based on the measurement configuration information.

After receiving the measurement configuration information sent by the network device, the terminal device measures a corresponding cell based on the measurement configuration information.

For example, in a corresponding measurement window, the terminal device performs RSRP/RSPQ measurement on an NR-SSS and/or a PBCH-DMRS in an SS block in a synchronization signal burst set sent by a corresponding cell, and reports a measurement result to a serving cell.

Optionally, one group of measurement configuration parameters is configured for all cells at one measurement frequency. Time domain resources corresponding to synchronization signal burst sets of all the cells at the measurement frequency are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the measurement frequency within one measurement window.

Optionally, a same measurement configuration parameter is used for all measurement frequencies. Time domain resources corresponding to synchronization signal burst sets of all cells at the measurement frequency are aligned within a specific range, in other words, a deviation of time domain resources corresponding to synchronization signal burst sets among different cells does not exceed a threshold. For example, the synchronization signal burst sets of the cells are limited to be within a same time range. In this way, the terminal device may complete measurement on the cells at the plurality of measurement frequencies within one measurement window.

Optionally, different measurement configuration parameters are configured for different measurement frequencies. When performing measurement, the terminal device may perform, at a time, measurement on cells at a same frequency according to a frequency sequence and by using a measurement gap (measurement gap) of the frequency, and switch to another frequency after completing measurement at a frequency. For example, as shown in FIG. 5b, for a frequency 1, the terminal device performs measurement on all cells at the frequency 1 according to a measurement gap of the frequency 1, switches to a frequency 2, and performs measurement on all cells at the frequency 2 according to a measurement gap of the frequency 2. Alternatively, the terminal device may perform measurement on cells in different measurement windows according to a time sequence. For example, as shown in FIG. 5c, if a first measurement window in the time sequence is a measurement window of the frequency 1, the terminal device performs measurement for the frequency 1 in the first measurement window; if a second measurement window is a measurement window of the frequency 2, the terminal device switches to the frequency 2 for measurement in the second measurement window.

In this embodiment of the present invention, the network device configures, for the terminal device, the measurement configuration parameter for measuring the synchronization signal block, so that the network device does not need to always send a downlink reference signal. This can reduce network-side overheads and improve system efficiency.

Further, a network side controls sending of synchronization signal burst sets, so that the terminal device can complete measurement on a plurality of cells within one measurement window, and the terminal device does not need to frequently perform measurement. This reduces overheads of the terminal device and improves measurement efficiency.

It should be understood that various implementations of this embodiment of the present invention may be implemented separately, or may be implemented in combination. This is not limited in this embodiment of the present invention.

It should be understood that specific examples in this embodiment of the present invention are provided to help a person skilled in the art better understand this embodiment of the present invention, but not to limit the scope of this embodiment of the present invention.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

The foregoing describes in detail the information transmission method according to this embodiment of the present invention. The following describes an information transmission apparatus according to an embodiment of the present invention.

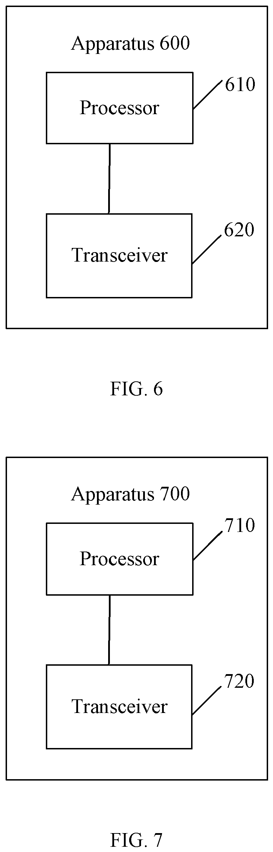

FIG. 6 is a schematic block diagram of an information transmission apparatus 600 according to an embodiment of the present invention. The apparatus 600 may be a network device.

It should be understood that the apparatus 600 may correspond to the network device in the foregoing method embodiments, and may have any function of the network device in the method.

The apparatus 600 shown in FIG. 6 includes a processor 610 and a transceiver 620.

The processor 610 is configured to determine measurement configuration information. The measurement configuration information includes at least one group of measurement configuration parameters, and each of the at least one group of measurement configuration parameters corresponds to at least one cell and is used by a terminal device to measure a synchronization signal block of the at least one cell.

The transceiver 620 is configured to send the measurement configuration information to the terminal device.

In this embodiment of the present invention, the network device configures, for the terminal device, a measurement configuration parameter for measuring a synchronization signal block, so that the network device does not need to always send a downlink reference signal. This can reduce network-side overheads and improve system efficiency.

Optionally, in one embodiment of the present invention, the at least one cell is a cell group.

Optionally, in one embodiment of the present invention, each group of measurement configuration parameters is associated with a transmission parameter of the synchronization signal block of the at least one cell.

Optionally, in one embodiment of the present invention, each group of measurement configuration parameters includes at least one of a time position of a measurement window, duration of the measurement window, and a measurement period.

Optionally, in one embodiment of the present invention, the measurement window covers a time domain resource corresponding to at least one synchronization signal burst set of each cell in the at least one cell, and/or the measurement period is a common multiple of a synchronization signal burst set period of the at least one cell or a maximum value in a synchronization signal burst set period of the at least one cell.

Optionally, in one embodiment of the present invention, each group of measurement configuration parameters corresponds to a plurality of cells, and a deviation of time domain resources corresponding to synchronization signal burst sets among the plurality of cells does not exceed a threshold.

Optionally, in one embodiment of the present invention, the at least one group of measurement configuration parameters corresponds to one measurement frequency.

Optionally, in one embodiment of the present invention, the measurement configuration information includes one group of measurement configuration parameters, and the one group of measurement configuration parameters corresponds to all measurement frequencies.

Optionally, in one embodiment of the present invention, the measurement configuration information includes a plurality of groups of measurement configuration parameters, and different groups of measurement configuration parameters in the plurality of groups of measurement configuration parameters correspond to different measurement frequencies.

Optionally, in one embodiment of the present invention, the transceiver 620 is configured to send the measurement configuration information to the terminal device by using common signaling.

Optionally, in one embodiment of the present invention, the common signaling includes a physical broadcast channel PBCH, remaining system information RMSI, or other system information OSI.

Optionally, in one embodiment of the present invention, the transceiver 620 is configured to send the measurement configuration information to the terminal device by using dedicated signaling.

Optionally, in one embodiment of the present invention, the dedicated signaling includes radio resource control RRC dedicated signaling.

Optionally, in one embodiment of the present invention, the measurement configuration information sent by using the dedicated signaling is used to update the measurement configuration information sent by using the common signaling.

In this embodiment of the present invention, a network side controls sending of synchronization signal burst sets, so that the terminal device can complete measurement on a plurality of cells within one measurement window, and the terminal device does not need to frequently perform measurement. This reduces overheads of the terminal device and improves measurement efficiency.

FIG. 7 is a schematic block diagram of an information transmission apparatus 700 according to another embodiment of the present invention. The apparatus 700 may be a terminal device.

It should be understood that the apparatus 700 may correspond to the terminal device in the foregoing method embodiments, and may have any function of the terminal device in the method.

The apparatus 700 shown in FIG. 7 includes a processor 710 and a transceiver 720.

The transceiver 720 is configured to receive measurement configuration information sent by a network device. The measurement configuration information includes at least one group of measurement configuration parameters, and each of the at least one group of measurement configuration parameters corresponds to at least one cell and is used to measure a synchronization signal block of the at least one cell.

The processor 710 is configured to perform cell measurement based on the measurement configuration information.

In this embodiment of the present invention, the network device configures, for the terminal device, a measurement configuration parameter for measuring a synchronization signal block, so that the network device does not need to always send a downlink reference signal. This can reduce network-side overheads and improve system efficiency.

Optionally, in one embodiment of the present invention, the at least one cell is a cell group.

Optionally, in one embodiment of the present invention, each group of measurement configuration parameters is associated with a transmission parameter of the synchronization signal block of the at least one cell.

Optionally, in one embodiment of the present invention, each group of measurement configuration parameters includes at least one of a time position of a measurement window, duration of the measurement window, and a measurement period.

Optionally, in one embodiment of the present invention, the measurement window covers a time domain resource corresponding to at least one synchronization signal burst set of each cell in the at least one cell, and/or the measurement period is a common multiple of a synchronization signal burst set period of the at least one cell or a maximum value in a synchronization signal burst set period of the at least one cell.

Optionally, in one embodiment of the present invention, each group of measurement configuration parameters corresponds to a plurality of cells, and a deviation of time domain resources corresponding to synchronization signal burst sets among the plurality of cells does not exceed a threshold.

Optionally, in one embodiment of the present invention, the at least one group of measurement configuration parameters corresponds to one measurement frequency.

Optionally, in one embodiment of the present invention, the measurement configuration information includes one group of measurement configuration parameters, and the one group of measurement configuration parameters corresponds to all measurement frequencies.

Optionally, in one embodiment of the present invention, the measurement configuration information includes a plurality of groups of measurement configuration parameters, and different groups of measurement configuration parameters in the plurality of groups of measurement configuration parameters correspond to different measurement frequencies.

Optionally, in one embodiment of the present invention, the transceiver 720 is configured to receive. by using common signaling, the measurement configuration information sent by the network device.

Optionally, in one embodiment of the present invention, the common signaling includes a physical broadcast channel PBCH, remaining system information RMSI, or other system information OSI.

Optionally, in one embodiment of the present invention, the transceiver 720 is configured to receive, by using dedicated signaling, the measurement configuration information sent by the network device.

Optionally, in one embodiment of the present invention, the dedicated signaling includes radio resource control RRC dedicated signaling.

Optionally, in one embodiment of the present invention, the processor 710 is configured to update, based on the measurement configuration information received by using the dedicated signaling, the measurement configuration information received by using the common signaling.

In this embodiment of the present invention, a network side controls sending of synchronization signal burst sets, so that the terminal device can complete measurement on a plurality of cells within one measurement window, and the terminal device does not need to frequently perform measurement. This reduces overheads of the terminal device and improves measurement efficiency.

It should be understood that the processor 610 or the processor 710 in the embodiments of the present invention may be implemented by using a processing unit or a chip. Optionally, the processing unit may include a plurality of units during implementation.

It should be understood that the transceiver 620 or the transceiver 720 in the embodiments of the present invention may be implemented by using a transceiving unit or a chip. Optionally, the transceiver 620 or the transceiver 720 may include a transmitter or a receiver, or may include a transmitting unit or a receiving unit.

It should be understood that the processor 610 and the transceiver 620 in the embodiments of the present invention may be implemented by using a chip, and the processor 710 and the transceiver 720 may be implemented by using a chip.

Optionally, the network device or the terminal device may further include a memory. The memory may store program code, and the processor invokes the program code stored in the memory to implement a corresponding function of the network device or the terminal device. Optionally, the processor and the memory may be implemented by using a chip.

An embodiment of the present invention further provides a processing apparatus, including a processor and an interface.

The processor is configured to execute the methods in the foregoing embodiments of the present invention.

The processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, which is implemented by reading software code stored in a memory. The memory may be integrated in the processor, or may be stand-alone and located outside the processor.

For example, the processing apparatus may be a field-programmable gate array (Field-Programmable Gate Array, FPGA), or an application-specific integrated chip (Application Specific Integrated Circuit, ASIC); or may be a system on chip (System on Chip, SoC), a central processor unit (Central Processor Unit, CPU), a network processor (Network Processor, NP), a digital signal processor (Digital Signal Processor, DSP), or a micro controller (Micro Controller Unit, MCU); or may be a programmable logic device (Programmable Logic Device, PLD), or another integrated chip.

An embodiment of the present invention further provides a communications system, including the network device in the foregoing network device embodiment and the terminal device in the foregoing terminal device embodiment.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, DVD), a semiconductor medium (for example, a Solid State Disk (Solid State Disk, SSD)), or the like.

It should be understood that, the term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission method, comprising:
determining (410), by a network device, measurement configuration information used for synchronization signal block measurement, wherein the measurement configuration information comprises a group of measurement configuration parameters and a plurality of physical cell identifiers of a plurality of cells for which the group of measurement configuration parameters is used; and
sending (420), by the network device, the measurement configuration information to a terminal device;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

2. An information transmission method, comprising:
receiving (420), by a terminal device, measurement configuration information sent by a network device, wherein the measurement configuration information comprises a group of measurement configuration parameters and a plurality of physical cell identifiers of a plurality of cells for which the group of measurement configuration parameters is used; and
measuring (430), by the terminal device, a synchronization signal block based on the measurement configuration information;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

3. The method according to claim 1 or 2, wherein:
the group of measurement configuration parameters corresponds to one measurement frequency; or
the group of measurement configuration parameters corresponds to a plurality of measurement frequencies.

4. The method according to any one of claims 1 to 3, wherein the group of measurement configuration parameters further comprises a time position of the measurement window, and duration of the measurement window.

5. The method according to any one of claims 1 to 4, wherein the group of measurement configuration parameter is associated with a transmission parameter of a synchronization signal block of a cell.

6. An information transmission apparatus which is a network device, comprising a processor (610) and a transceiver (620); wherein:
the processor is configured to determine measurement configuration information used for synchronization signal block measurement, wherein the measurement configuration information comprises a group of measurement configuration parameters and a plurality of physical cell identifiers of a plurality of cells for which the group of measurement configuration parameters is used; and
the transceiver (620) is configured to send the measurement configuration information to a terminal device;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

7. An information transmission apparatus which is a terminal device, comprising a processor (710) and a transceiver (720); wherein:
the transceiver (710) is configured to receive measurement configuration information sent by a network device, wherein the measurement configuration information comprises a group of measurement configuration parameters and a plurality of physical cell identifiers of a plurality of cells for which the group of measurement configuration parameters is used; and
the processor (720) is configured to measure a synchronization signal block based on the measurement configuration information;
wherein the group of measurement configuration parameters comprises a measurement period; and
wherein the measurement period is a common multiple of a synchronization signal burst set period of a cell in the plurality of cells, or a maximum value in a synchronization signal burst set period of a cell in the plurality of cells.

8. The apparatus according to claim 6 or 7, wherein:
the group of measurement configuration parameters corresponds to one measurement frequency; or
the group of measurement configuration parameters corresponds to a plurality of measurement frequencies.

9. The apparatus according to any one of claims 6 to 8, wherein the group of measurement configuration parameters further comprises a time position of the measurement window, and duration of the measurement window.

10. The apparatus according to any one of claims 6 to 9, wherein the group of measurement configuration parameters is associated with a transmission parameter of a synchronization signal block of a cell.

11. A computer storage medium, wherein the computer storage medium stores program code, and the program code is used to instruct an information transmission apparatus according to claim 6 to execute the method according to any one of claims 1 and 3 to 5 or an information transmission apparatus according to claim 7 to execute the method according to any one of claims 2 to 5.

12. A computer program product, wherein the computer program product comprises an instruction; and when the instruction is run on a computer of an information transmission apparatus according to claim 6, the computer executes the method according to any one of claims 1 and 3 to 5 or when the instruction is run on a computer of an information transmission apparatus according to claim 7, the computer executes the method according to any one of claims 2 to 5.

## Patentansprüche

1. Informationsübertragungsverfahren, umfassend:
Bestimmen (410) von zur Synchronisationssignal-Blockmessung verwendeten Messungskonfigurationsinformationen durch eine Netzvorrichtung, wobei die Messungskonfigurationsinformationen eine Gruppe von Messungskonfigurationsparametern und mehrere physische Zellenkennungen mehrerer Zellen umfassen, für die die Gruppe von Messungskonfigurationsparameter verwendet wird; und
Senden (420) der Messungskonfigurationsinformationen zu einer Endgerätevorrichtung durch die Netzvorrichtung;
wobei die Gruppe von Messungskonfigurationsparametern eine Messungsperiode umfasst; und
wobei die Messungsperiode ein gemeinsames Vielfaches einer Synchronisationssignal-Burstmengenperiode einer Zelle der mehreren Zellen oder ein Maximalwert in einer Synchronisationssignal-Burstmengenperiode einer Zelle der mehreren Zellen ist.

2. Informationsübertragungsverfahren, umfassend:
Empfangen (420) von durch eine Netzvorrichtung gesendeten Messungskonfigurationsinformationen durch eine Endgerätevorrichtung, wobei die Messungskonfigurationsinformationen eine Gruppe von Messungskonfigurationsparametern und mehrere physische Zellenkennungen mehrerer Zellen umfassen, für die die Gruppe von Messungskonfigurationsparametern verwendet wird; und
Messen (430) eines Synchronisationssignalblocks durch die Endgerätevorrichtung auf der Basis der Messungskonfigurationsinformationen;
wobei die Gruppe von Messungskonfigurationsparametern eine Messungsperiode umfasst; und
wobei die Messungsperiode ein gemeinsames Vielfaches einer Synchronisationssignal-Burstmengenperiode einer Zelle der mehreren Zellen oder ein Maximalwert in einer Synchronisationssignal-Burstmengenperiode einer Zelle der mehreren Zellen ist.

3. Verfahren nach Anspruch 1 oder 2, wobei
die Gruppe von Messungskonfigurationsparametern einer Messungsfrequenz entspricht; oder
die Gruppe von Messungskonfigurationsparametern mehreren Messungsfrequenzen entspricht.

4. Verfahren nach einem der Ansprüche 1 bis 3, wobei die Gruppe von Messungskonfigurationsparametern ferner eine Zeitposition des Messungsfensters und Dauer des Messungsfensters umfasst.

5. Verfahren nach einem der Ansprüche 1 bis 4, wobei die Gruppe von Messungskonfigurationsparametern einen Übertragungsparameter eines Synchronisationssignalblocks einer Zelle zugeordnet ist.

6. Informationsübertragungsvorrichtung, die eine Netzvorrichtung ist, die einen Prozessor (610) und einen Sendeempfänger (620) umfasst; wobei
der Prozessor ausgelegt ist zum Bestimmen von zur Synchronisationssignal-Blockmessung verwendeten Messungskonfigurationsinformationen, wobei die Messungskonfigurationsinformationen eine Gruppe von Messungskonfigurationsparametern und mehrere physische Zellenkennungen mehrerer Zellen umfassen, für die die Gruppe von Messungskonfigurationsparameter verwendet wird; und
der Sendeempfänger (620) ausgelegt ist zum Senden der Messungskonfigurationsinformationen zu einer Endgerätevorrichtung;
wobei die Gruppe von Messungskonfigurationsparametern eine Messungsperiode umfasst; und
wobei die Messungsperiode ein gemeinsames Vielfaches einer Synchronisationssignal-Burstmengenperiode einer Zelle der mehreren Zellen oder ein Maximalwert in einer Synchronisationssignal-Burstmengenperiode einer Zelle der mehreren Zellen ist.

7. Informationsübertragungsvorrichtung, die eine Endgerätevorrichtung ist, die einen Prozessor (710) und einen Sendeempfänger (720) umfasst; wobei
der Sendeempfänger (710) ausgelegt ist zum Empfangen von durch eine Netzvorrichtung gesendeten Messungskonfigurationsinformationen, wobei die Messungskonfigurationsinformationen eine Gruppe von Messungskonfigurationsparametern und mehrere physische Zellenkennungen mehrerer Zellen umfassen, für die die Gruppe von Messungskonfigurationsparametern verwendet wird; und
der Prozessor (720) ausgelegt ist zum Messen eines Synchronisationssignalblocks auf der Basis der Messungskonfigurationsinformationen;
wobei die Gruppe von Messungskonfigurationsparametern eine Messungsperiode umfasst; und
wobei die Messungsperiode ein gemeinsames Vielfaches einer Synchronisationssignal-Burstmengenperiode einer Zelle der mehreren Zellen oder ein Maximalwert in einer Synchronisationssignal-Burstmengenperiode einer Zelle der mehreren Zellen ist.

8. Vorrichtung nach Anspruch 6 oder 7, wobei
die Gruppe von Messungskonfigurationsparametern einer Messungsfrequenz entspricht; oder
die Gruppe von Messungskonfigurationsparametern mehreren Messungsfrequenzen entspricht.

9. Vorrichtung nach einem der Ansprüche 7 bis 8, wobei die Gruppe von Messungskonfigurationsparametern ferner eine Zeitposition des Messungsfensters und Dauer des Messungsfensters umfasst.

10. Vorrichtung nach einem der Ansprüche 6 bis 9, wobei die Gruppe von Messungskonfigurationsparametern einem Übertragungsparameter eines Synchronisationssignalblocks einer Zelle zugeordnet ist.

11. Computerspeicherungsmedium, wobei das Computerspeicherungsmedium Programmcode speichert und der Programmcode verwendet wird, um eine Informationsübertragungsvorrichtung nach Anspruch 6 anzuweisen, das Verfahren nach einem der Ansprüche 1 und 3 bis 5 auszuführen, oder eine Informationsübertragungsvorrichtung nach Anspruch 7, das Verfahren nach einem der Ansprüche 2 bis 5 auszuführen.

12. Computerprogrammprodukt, wobei das Computerprogrammprodukt eine Anweisung umfasst; und wenn die Anweisung auf einem Computer einer Informationsübertragungsvorrichtung nach Anspruch 6 laufengelassen wird, der Computer das Verfahren nach einem der Ansprüche 1 und 3 bis 5 ausführt, oder wenn die Anweisung auf einem Computer einer Informationsübertragungsvorrichtung nach Anspruch 7 laufengelassen wird, der Computer das Verfahren nach einem der Ansprüche 2 bis 5 ausführt.

## Revendications

1. Procédé de transmission d'informations, comprenant de :
déterminer (410), par un dispositif de réseau, des informations de configuration de mesure utilisées pour une mesure de blocs de signaux de synchronisation, dans lequel les informations de configuration de mesure comprennent un groupe de paramètres de configuration de mesure et une pluralité d'identifiants de cellules physiques d'une pluralité de cellules pour lesquelles le groupe de paramètres de configuration de mesure est utilisé ; et
envoyer (420), par le dispositif de réseau, les informations de configuration de mesure à un dispositif terminal ;
dans lequel le groupe de paramètres de configuration de mesure comprend une période de mesure ; et
dans lequel la période de mesure est un multiple commun d'une période d'ensemble de salves de signaux de synchronisation d'une cellule dans la pluralité de cellules, ou une valeur maximale dans une période d'ensemble de salves de signaux de synchronisation d'une cellule dans la pluralité de cellules.

2. Procédé de transmission d'informations, comprenant de :
recevoir (420), par un dispositif terminal, des informations de configuration de mesure envoyées par un dispositif de réseau, dans lequel les informations de configuration de mesure comprennent un groupe de paramètres de configuration de mesure et une pluralité d'identifiants de cellules physiques d'une pluralité de cellules pour lesquelles le groupe de paramètres de configuration de mesure est utilisé ; et
mesurer (430), par le dispositif terminal, un bloc de signaux de synchronisation sur la base des informations de configuration de mesure ;
dans lequel le groupe de paramètres de configuration de mesure comprend une période de mesure ; et
dans lequel la période de mesure est un multiple commun d'une période d'ensemble de salves de signaux de synchronisation d'une cellule dans la pluralité de cellules, ou une valeur maximale dans une période d'ensemble de salves de signaux de synchronisation d'une cellule dans la pluralité de cellules.

3. Procédé selon la revendication 1 ou 2, dans lequel :
le groupe de paramètres de configuration de mesure correspond à une fréquence de mesure ; ou
le groupe de paramètres de configuration de mesure correspond à une pluralité de fréquences de mesure.

4. Procédé selon l'une quelconque des revendications 1 à 3, dans lequel le groupe de paramètres de configuration de mesure comprend en outre une position temporelle de la fenêtre de mesure, et une durée de la fenêtre de mesure.

5. Procédé selon l'une quelconque des revendications 1 à 4, dans lequel le groupe de paramètres de configuration de mesure est associé à un paramètre de transmission d'un bloc de signaux de synchronisation d'une cellule.

6. Appareil de transmission d'informations qui est un dispositif de réseau, comprenant un processeur (610) et un émetteur-récepteur (620) ; dans lequel :
le processeur est configuré pour déterminer des informations de configuration de mesure utilisées pour la mesure de blocs de signaux de synchronisation, dans lequel les informations de configuration de mesure comprennent un groupe de paramètres de configuration de mesure et une pluralité d'identifiants de cellules physiques d'une pluralité de cellules pour lesquelles le groupe de paramètres de configuration de mesure est utilisé ; et
l'émetteur-récepteur (620) est configuré pour envoyer les informations de configuration de mesure à un dispositif terminal ;
dans lequel le groupe de paramètres de configuration de mesure comprend une période de mesure ; et
dans lequel la période de mesure est un multiple commun d'une période d'ensemble de salves de signaux de synchronisation d'une cellule dans la pluralité de cellules, ou une valeur maximale dans une période d'ensemble de salves de signaux de synchronisation d'une cellule dans la pluralité de cellules.

7. Appareil de transmission d'informations qui est un dispositif terminal, comprenant un processeur (710) et un émetteur-récepteur (720) ; dans lequel :
l'émetteur-récepteur (710) est configuré pour recevoir des informations de configuration de mesure envoyées par un dispositif de réseau, dans lequel les informations de configuration de mesure comprennent un groupe de paramètres de configuration de mesure et une pluralité d'identifiants de cellules physiques d'une pluralité de cellules pour lesquelles le groupe de paramètres de configuration de mesure est utilisé ; et
le processeur (720) est configuré pour mesurer un bloc de signaux de synchronisation sur la base des informations de configuration de mesure ;
dans lequel le groupe de paramètres de configuration de mesure comprend une période de mesure ; et
dans lequel la période de mesure est un multiple commun d'une période d'ensemble de salves de signaux de synchronisation d'une cellule dans la pluralité de cellules, ou une valeur maximale dans une période d'ensemble de salves de signaux de synchronisation d'une cellule dans la pluralité de cellules.

8. Appareil selon la revendication 6 ou 7, dans lequel :
le groupe de paramètres de configuration de mesure correspond à une fréquence de mesure ; ou
le groupe de paramètres de configuration de mesure correspond à une pluralité de fréquences de mesure.

9. Appareil selon l'une quelconque des revendications 6 à 8, dans lequel le groupe de paramètres de configuration de mesure comprend en outre une position temporelle de la fenêtre de mesure, et une durée de la fenêtre de mesure.

10. Appareil selon l'une quelconque des revendications 6 à 9, dans lequel le groupe de paramètres de configuration de mesure est associé à un paramètre de transmission d'un bloc de signaux de synchronisation d'une cellule.

11. Support de stockage informatique, le support de stockage informatique stockant un code de programme, et le code de programme étant utilisé pour ordonner à un appareil de transmission d'informations selon la revendication 6 d'exécuter le procédé selon l'une quelconque des revendications 1 et 3 à 5 ou à un appareil de transmission d'informations selon la revendication 7 d'exécuter le procédé selon l'une quelconque des revendications 2 à 5.

12. Produit de programme informatique, le produit de programme informatique comprenant une instruction, et lorsque l'instruction est exécutée sur un ordinateur d'un appareil de transmission d'informations selon la revendication 6, l'ordinateur exécute le procédé selon l'une quelconque des revendications 1 et 3 à 5 ou lorsque l'instruction est exécutée sur un ordinateur d'un appareil de transmission d'informations selon la revendication 7, l'ordinateur exécute le procédé selon l'une quelconque des revendications 2 à 5.
